# EUROPEAN PATENT SPECIFICATION

(11) **EP 1 148 660 B1**
(45) Date of publication and mention of the grant of the patent: **23.12.2009**
(21) Application number: 01109093.3
(22) Date of filing: 12.04.2001
(51) Int. Cl.: H04B 7/185

(54) **Geo-mobile satellite system configuration with high-speed data capability**
Satelliten Kommunikationssystem Geo-mobil mit Vermögen zur Datenübertragung mit hoher Geschwindigkeit
Système de communication par satellite géo-mobile avec des capacités de transmission de données à grande vitesse

(30) Priority: 19.04.2000 US 552296
(43) Date of publication of application: 24.10.2001
(73) Proprietor: Hughes Electronics Corporation, El Segundo, California 90245-0956 (US)
(72) Inventor: Talaie, Farzad, Redondo Beach, California 90278 (US); Himes, John G., Placentia, California 92680 (US); Noerpel, Anthony R., Lovettsville, Virginia 20180 (US); Rotondo, John L., El Segundo, California 90245 (US); Johnson, Richard H., Redondo Beach, California 90277 (US)
(74) Representative: Steil, Christian

(56) References cited:
- WO-A-97/37442
- GB-A- 2 319 699
- GB-A- 2 320 162
- US-A- 5 699 355

## Description

### TECHNICAL FIELD OF THE INVENTION

The present invention relates in general to data communication and in particular to high speed satellite communication.

### BACKGROUND OF THE INVENTION

Radio communication systems rely on modulating carrier frequencies in a finite portion of the electromagnetic spectrum to wirelessly transmit and receive signals. Modulation can be performed on the amplitude, frequency, and/or phase of the carrier signal to separate the carrier from unwanted noise. The information portion of the signals typically conveys information such as voice, video, and computer data between transmitting/receiving devices such as voice terminals (e.g, wireless phone) and data terminals (e.g., portable computer).

In order to transmit the signals over a large distance or to various geographical regions, a relay such as a satellite may be used. Passive communication satellites may be used to return transmitted signals to earth on the same carrier frequency they were transmitted on. Active communication satellites can be used to receive the transmitted signals on one carrier frequency and to retransmit the signals on another carrier frequency. Geosynchronous satellites are especially well suited for such a task due to their large ground coverage.

A rapid increase in the number of voice/data terminals that are in service, as well as new data intensive applications, has created a demand for a corresponding increase in the capacity and speed of many communication systems. Well known techniques exist to transmit high speed data. For instance, a large portion of the electromagnetic spectrum could be used to transmit wideband data using common modulation techniques. However, these approaches suffer from certain drawbacks. For instance, a new wideband system would be incompatible with existing narrow band infrastructure. Further, additional electromagnetic spectrum is limited and costly. In addition, current satellite systems do not offer both narrowband and wideband data channels (64 Kbps to 128 Kbps) in a flexible and dynamic fashion. Voice coding is getting better and better and resultant compression of the digital speech to more efficient resource channel is possible. Conversely, data applications require transmission of more and more data over the same pool of resources, which creates a problematic scenario.

Document US 5 699 355 shows a system and a method to assign satellite link access bandwidth upon demand as requested by a number of subscriber units. After receiving the connection request, a number of time slots being requested is determined. Next, if the maximum number of available time slots is greater than or equal to the number of time slots being requested plus the number of time slots already in use, the connection request is accepted and the number of requested time slots are allocated before communication begins. Otherwise the connection request is rejected and the subscriber unit must try later.

### SUMMARY OF THE INVENTION

The present invention addresses the problems associated with the prior art by providing a communication system for transmitting high speed radio signals by utilizing the same physical resources (frequency and power) as low bandwidth voice telephony and low data rate services in a dynamic and flexible manner. In addition, the same control channels are used for basic services (e.g., voice and low-speed data) as are used for high-speed data. This art utilizes a mechanism to aggregate basic building block channels (voice channel) to create a high-speed data channel, by either combining multiple voice channel time slots and carriers to create a large carrier bandwidth, or by utilizing multiple existing time slots/carriers to provide sufficient bandwidth for the high-speed application. The number of time slots and carriers which are used to create the bandwidth for high-speed data is a function of desired data rate and availability of resources (power and frequency). In the disclosed system, a transmitting device transmits first and second signals using first and second time slots and/or first and second carrier frequencies to a relay device which retransmits the signals using multiple time slots and/or multiple carrier frequencies of the basic voice channels. The signals are then recovered at one or more receiving devices by demodulating the carrier frequencies and/or monitoring the time slots of the signal. By using multiple carrier frequencies and/or multiple time slots to convey information, higher data rates are achieved.

In accordance with the present invention a voice data and communication system for providing flexible bandwidth allocation between voice services and data services is provided. The system comprises a transmitting device for transmitting a first high bandwidth data signal by using two or more time-division multiple access voice slots. The system also comprises a relay device for receiving the first data signal and for transmitting a second data signal, wherein the second data signal uses two time-division multiple access voice slots. Further, the system is provided with a receiving device for receiving the second data signal, wherein the receiving device monitors two time-division multiple access voice slots.

Additional time slots are used where the number of additional time slots is a function of a desired data rate and the availability of resources such as power, frequency and time. The additional time slots are allocated dynamically so that a predetermined blocking rate is maintained for the voice services. In some embodiments, a common control is used for voice and data services.

In some embodiments, the transmitting device comprises a data terminal, a voice terminal, and/or a gateway station. In certain embodiments the transmitting device may be coupled to a communications network. In such an instance, the communications network may comprise a public switched telephone network, a public switched data network, a public land mobile network and/or the Internet

In certain embodiments, the first digital beam may comprise an Ultra High Frequency (UHF) band, an L-band, S-band, C-band, Ku-band, and/or Ka-band. Also preferably, the relay device may comprise a satellite. In such an instance, the satellite may comprise a digital beam forming geosynchronous communications satellite.

In certain embodiments, the second digital beam comprises a second band of carrier frequencies. In such an instance, the second band of frequencies may comprise an Ultra High Frequency (UHF) band, an L-band, S-band, C-band, Ku-band, and/or Ka-band. Also, the receiving device may comprise a voice terminal, a data terminal, and/or a gateway station. In some embodiments, the receiving device may be coupled to a communications network. In such an instance, the communications network may comprise a public switched telephone network, public land mobile network, and/or the Internet.

### BRIEF DESCRIPTION OF THE DRAWINGS

These and other features and advantages of the present invention, will become more apparent from a consideration of the following detailed description of certain preferred embodiments when taken in conjunction with the drawings in which:
FIG. 1 is a diagram of a communication system capable of utilizing the teachings of the present invention;
FIG. 2 is a system level diagram of the communication system of FIG. 1;
FIG. 3 is a more detailed diagram of the communication system shown, in FIG.1 and embodying the present invention;
FIG. 4 is a time domain diagram of typical TDMA time slots; and,
FIG. 5 is a frequency domain diagram of typical FDMA carrier frequencies.

### DETAILED DESCRIPTION OF THE PREFERRED EMBODIMENTS

Although the following description focuses on systems for transmitting high speed radio signals using two time slots and/or two carrier frequencies, persons of ordinary skill in the art will readily appreciate that the techniques of the present invention are in no way limited to radio communication systems or to only two time slots or two carrier frequencies. On the contrary, any communication system which might benefit from an efficient use of allocated communication channels may employ the techniques described and illustrated herein. Such systems might include wired systems, such as computer networks. Further, persons of ordinary skill in the art will readily appreciate that any number of carrier frequencies and/or time slots could be employed.

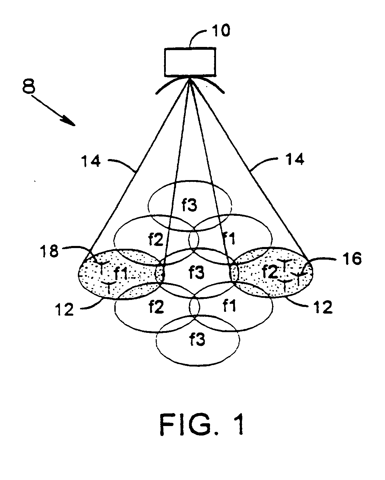

A diagram of a communication system 8 for distributing radio signals, capable of utilizing the teachings of the present invention, is shown in FIG. 1. A relay device 10, such as a beam forming satellite 10a and/or gateway station 10b, is used to cover several distinct geographical regions 12. Beams 14 with sufficient angular separation may share frequencies in order to increase communication capacity without increasing the allocated bandwidth. For example, by separating one beam using frequency f1 by other beams using frequencies f2 and f3, another beams may reuse frequency f1. Further, these relatively narrow beams 14 have higher gain than relatively wide beams and, therefore, smaller antennas may be used on receiving devices 16.

A transmitting device 18 in a first beam 14 transmits a signal to the relay device 10, which in turn retransmits the signal to one or more receiving devices 16. The relay device 10 may transmit the signal directly to a receiving device 16 (e.g., from a first handset to a satellite 10a to a second handset); or, the relay device 10 may transmit the signal to a receiving device indirectly (e.g., from a first handset to a satellite 10a to a gateway station 10b to a satellite 10a to a second handset). The receiving devices 16 may be in the same beam 14 as the transmitting device 18 and/or a different beam 14 or beams 14. The transmitting devices 18, relay device 10, and/or receiving devices 16 are preferably cooperating members of a multiple access system such as a time division multiple access (TDMA) system, code division multiple access (CDMA) system, and/or frequency division multiple access (FDMA) system.

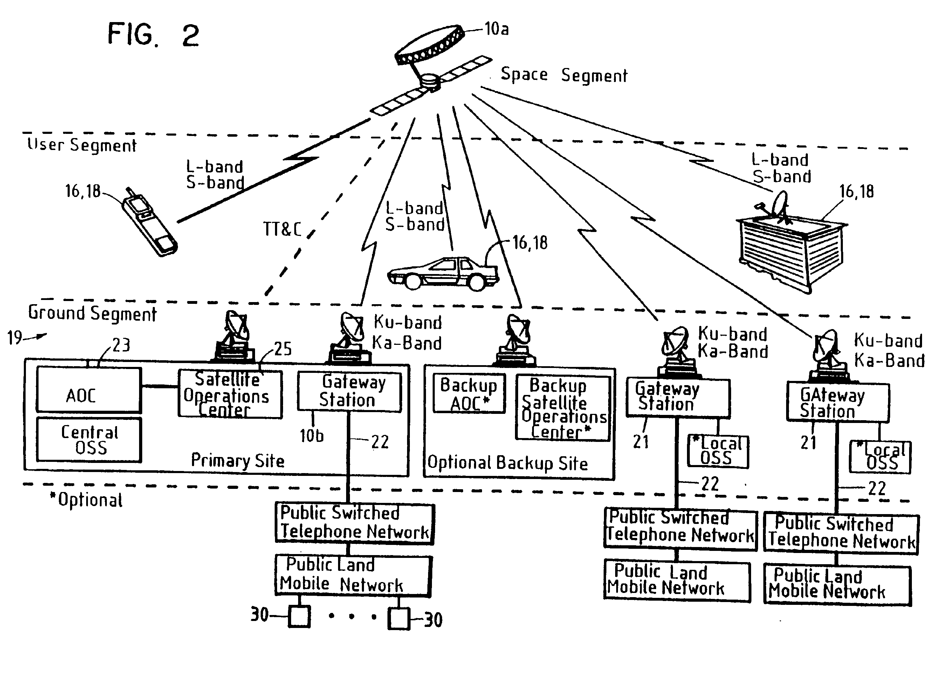

A Geo-Mobile (GEM) voice and/or data terminal could be used to transmit signals to a mobile satellite system (MSS) employing a geosynchronous satellite 10 and a ground segment 19 (FIG. 2). The ground segment 19 could include a gateway station (GS) 10b that is interfaced to a public switched telephone network (PSTN) 22, a public switched data network (PSDN), a public land mobile network (PLMN), and/or the Internet allowing GEM voice/data terminals 16, 18 to communicate with other terminals 30 associated these systems as well as other GEM terminals 16, 18. The ground segment 19 could also include an advanced operations center (AOC) 23 and a satellite operations center (SOC) 25. The AOC 23 manages the satellite payload and resources (e.g., time, frequency, and power). Further, the AOC 23 could monitor and control various service providers. The SOC 25 could manage and control functions such as telemetry tracking and control, bus sub-system and payload repeater anomaly correction, turn-around and range, and satellite attitude and positioning.

A system embodying the present invention allows for the generation of high-speed data by utilizing the same basic resources (e.g. bandwidth) as existing voice and/or low data rate services. The existing system consists of a set of control channels for the voice application and a defined set of resources required to support a voice call (i.e., a frequency, time, power resource) called a voice traffic channel (VTCH). The control channels typically include a random access channel (RACH) which is used to resolve contention between competing user terminals (UT) for service. The control channels may also include an access grant channel (AGCH) which is used for the network to reply to the UT (resolving contention, performing certain link maintenance tasks like power control commands, timing and frequency corrections, etc.) and to assign a dedicated channel or time/frequency/power resource for further communication between the UT and the network. Further, a broadcast control channel (BCCH) is typically included, which is used by the network to convey system information to the user terminal, such as the identity of the service provider, access information, time of day, services offered within that particular network, etc.

The new capabilities fit within the current architecture. The new system utilizes the same control channels for high-speed data as are used for existing services (e.g., voice and low speed data). Call setup procedures are exactly the same as the current voice/data services, e.g., use RACH message for terminal to request for service; AGCH & SDCCH messages for the network to grant dedicated channel to complete call setup, authentication, and ciphering; BCCH message to convey system information; control channels to convey control messages during call; and traffic channel (in this case consisting of multiple time slots and carriers) for traffic communications. Call control messages may be modified slightly to add high-speed data services. The system utilizes a mechanism to aggregate basic building block voice channels to create larger bandwidth to support high-speed data. The system may combine multiple voice channels (time slots) and/or carriers to create one large carrier bandwidth, or the system may utilize multiple existing voice channels (time slots) and carriers to create the bandwidth for a high-speed data application. Preferably, all of this is done dynamically so that a certain blocking rate can be maintained on the voice traffic. In other words, the data applications lose bandwidth if more resources are required to support voice calls.

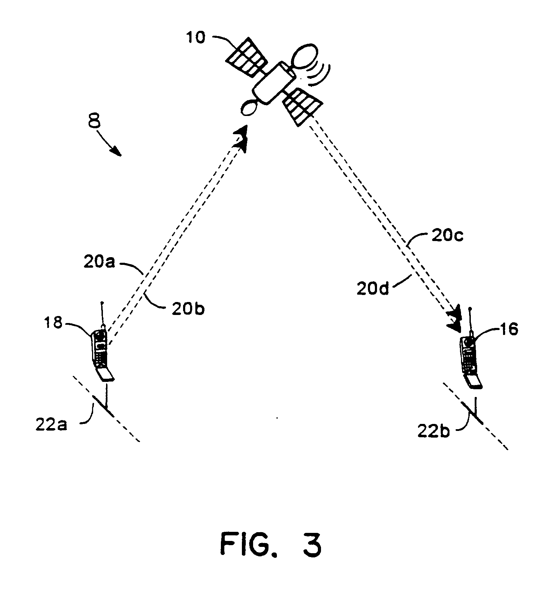

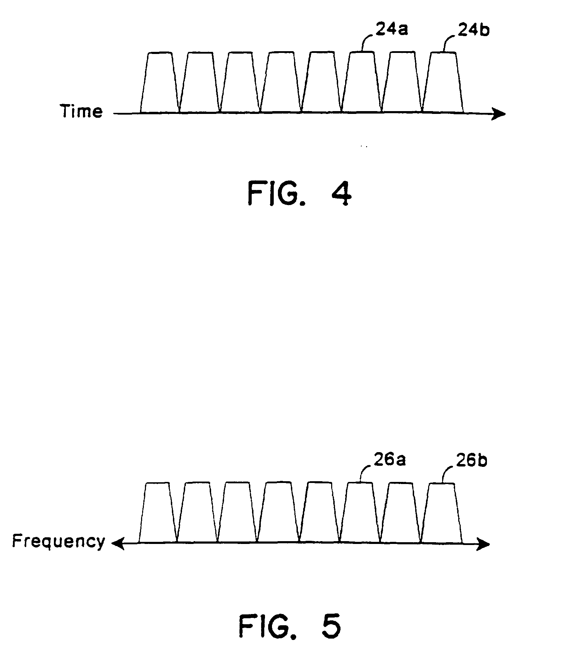

A more detailed diagram of the communication system 8 of FIG.1 is illustrated in FIG. 3. Dynamic resource allocation allows for reconfiguration of the system on demand for low data rate voice/data and/or high-speed data services using multiple time slots. A transmitting device 18 is used to transmit a higher bandwidth data signal via first and second signals 20a, 20b using first and second time slots 24a, 24b (shown in FIG. 4) to the relay device 10 (e.g., the satellite 10a and/or gateway station 10b). The time slots are normally used for voice calls and/or low speed data. Persons of ordinary skill in the art will readily appreciate that any number of time slots may be used to further increase the bandwidth of the data. The number of time slots/carriers available to create the bandwidth for high-speed data is a function of desired data rate (the higher data rate the higher bandwidth required) and the availability of resources (e.g., power and frequency). The transmitting device 18 may be a data terminal, such as a portable computer, a voice terminal, such as a wireless telephone, a gateway station, or any other transmitting device. The transmitting device 18 is optionally coupled to a communications network 22a, such as a PSTN, a PSDN, a PLMN, the Internet, or any other network. The signal is preferably a data signal, such as data originating from a computer, but could be a voice signal, such as a digitally encoded voice signal, or any other signal. The carrier frequency is preferably in a band of frequencies allocated for satellite communication, such as an Ultra High Frequency (UHF) band, an L-band, S-band, C-band, Ku-band and/or an Ka-band of frequencies. However, persons of ordinary skill in the art will readily appreciate that any frequency or band of frequencies may be used in the spirit of the present invention.

The relay device 10 receives the signals 20a, 20b by demodulating the carrier frequency or digitally sampling a downconverted signal. Subsequently, the relay device 10 retransmits the signals 20a, 20b as signals 20c, 20d using two time slots. The time slots for the retransmitted signals 20c, 20d may be the same or different from the time slots used by the transmitting device 18 for the signals 20a, 20b. The relay device 10 is preferably a satellite 10a, such as a digital beam forming geosynchronous communications satellite, but could be any device capable of receiving and retransmitting TDMA signals; such as a gateway station 10b, or a combination of a satellite 10a and a gateway station 10b.

The signals 20c, 20d are then recovered at one or more receiving devices 16 by demodulating the carrier frequency and monitoring two or more time slots of the signal. Subsequently, the system may re-assign bandwidth utilized for the high-speed data back to a resources pool (power and frequency) to be reused for other lower data rate services (voice and/or data) or for other high-speed data.

Like the transmitting device 18, the receiving device 16 may be a data terminal, such as a portable computer, a voice terminal, such as a wireless telephone, a gateway station, or any other receiving device. Also like the transmitting device 18, the receiving device 16 is optionally coupled to a communications network 22b such as a PSTN, PSDN, PLMN, the Internet, or any other network.

In an alternate embodiment, dynamic resource allocation allows for reconfiguration of the system on demand for low data rate voice/data and/or high-speed data services. The transmitting device 18 (e.g., a terminal or gateway station connected to a network) is used to transmit a high bandwidth data signal via first and second narrow beam signals 20a, 20b using first and second carrier frequencies 24a, 24b (shown in FIG. 5) to the relay device 10. The carrier frequencies are normally used for voice calls and/or low speed data. Persons of ordinary skill in the art will readily appreciate that any number of carrier frequencies may be used to further increase the bandwidth of the data. The number of time slots/carriers available to create the bandwidth for high-speed data is a function of desired data rate (the higher data rate the higher bandwidth required) and availability of resources (power and frequency). High-speed data channels require large bandwidth (frequency) and power, therefore the system must have the flexibility to allow for dynamic use of available resources to meet customer demand and limited available resources. For example, in the preferred embodiment, 16Kbps requires an entire carrier (24 time slots), 32 Kbps requires two full carriers, 64 Kbps requires four full carriers, and 128 Kbps requires eight full carriers. As before, the carrier frequencies are preferably in a band of frequencies allocated for satellite communication, such as an Ultra High Frequency (UHF) band, an L-band, S-band, C-band, Ku-band and/or an Ka-band of frequencies. However, persons of ordinary skill in the art will readily appreciate that any frequency or band of frequencies may be used.

The relay device 10 receives the signals 20a, 20b by demodulating both of the carrier frequencies simultaneously or digitally sampling downconverted signals. Subsequently, the relay device 10 retransmits the signals 20a, 20b as signals 20c, 20d using two or more carrier frequencies. The carrier frequencies for the retransmitted signals 20c, 20d may be the same or different from the carrier frequencies used by the transmitting device 18 for the signals 20a, 20b. The relay device 10 is preferably a satellite 10a, such as a digital beam forming geosynchronous communications satellite, but could be any device capable of receiving and retransmitting signals on multiple frequencies simultaneously, such as a gateway station 10b, or a combination of a satellite 10a and a gateway station 10b. The signals 20c, 20d are then recovered at one or more receiving devices 16 by demodulating the carrier frequencies simultaneously or digitally sampling downconverted signals. Subsequently, the system may re-assign bandwidth utilized for the high-speed data back to a resources pool (power and frequency) to be reused for other lower data rate services (voice and/or data) or for other high-speed data.

The system has the ability to provide full duplex/half duplex and svmmetrical/non-symmetrical data services for Point to Point (PtP) and Point to Multipoint (PtM) data applications. For PtM applications, the system may use statistical multiplexing to combine multiple data channels destined for multiple users in one large bandwidth for the forward direction. However, the return direction may be at a lower data rate because its PtP nature is back to the servicing ground station. The system also supports data calls from PSDN to UT terminals (single hop) or between two Uts via a double hop configuration.

In summary, persons of ordinary skill in the art will readily appreciate that a system for transmitting both low bandwidth voice and high bandwidth data has been provided. Systems implementing the teachings of the invention can enjoy high speed wireless data applications using existing infrastructure. The system provides flexible data rates and flexible geographical coverage using dynamic resource sharing of time slots and/or carrier frequencies.

The foregoing description has been presented for the purposes of illustration and description. It is not intended to be exhaustive or to limit the invention to the precise form disclosed. Many modifications and variations are possible in light of the above teachings. It is intended that the scope of the invention be limited not by this detailed description, but rather by the claims appended hereto.

## Claims

1. A voice and data communication system (8) for providing flexible bandwidth allocation between voice services and data services, comprising:
a transmitting device (18) for transmitting a first high bandwidth data signal (20) by using two time-division multiple access voice slots (24);
a relay device (10) for receiving the first data signal (20) and for transmitting a second data signal (20), wherein the second data signal (20) uses two time-division multiple access voice slots (24); and,
a receiving device (16) for receiving the second data signal (20), wherein the receiving device (16) monitors two time-division multiple access voice slots (24),
**characterized in that** additional time slots (24) are used by the transmitting device (18) to transmit the first high bandwidth data signal (20), wherein the number of additional time slots (24) used is a function of a desired data rate and availability of resources,
wherein the additional time slots (24) are allocated dynamically so that a predetermined blocking rate is maintained for the voice services.

2. The system of claim 1, **characterized in that** a common control channel is used for the voice services and the data services.

3. The system of any of claims 1-2, **characterized in that** the transmitting device (18) and/or the receiving device (16) comprises one or more of the group consisting of a data terminal, a voice terminal, and a gateway station.

4. The system of any of claims 1-3, **characterized in that** the transmitting device (18) and/or the receiving device (16) is coupled to a communications network (22a; 22b).

5. The system of claim 4, **characterized in that** the communications network (22a; 22b) comprises one or more of the group consisting of a public switched telephone network, a public switched data network, a public land mobile network, and the Internet.

6. The system of any of claims 1-5, **characterized in that** the first data signal (20) and/or the second data signal (20), comprises a beam of one or more of the group consisting of UHF band frequencies, L-band frequencies, S-band frequencies, C-band frequencies, Ku-band frequencies, and Ka-band frequencies.

7. A system of any of claims 1-6, **characterized in that** the relay device (10) comprises a satellite (10a), preferably a digital beam forming geosynchronous communications satellite (10a).

## Patentansprüche

1. Sprach- und Datenkommunikationssystem (8) zum Bereitstellen einer flexiblen Bandbreitenzuweisung zwischen Sprachdienstleistungen und Datendienstleistungen, mit
einer Übertragungseinrichtung (18) zum Übertragen eines ersten Datensignals (20) von hoher Bandbreite durch Verwenden zweier Zeitmultiplex-Spracheinschübe (24);
einer Relaiseinrichtung (10) zum Empfangen der ersten Datensignale (20) und zum Übertragen eines zweiten Datensignals (20), wobei das zweite Datensignal (20) zwei Zeitmultiplex-Spracheinschübe (24) verwendet, und
einer Empfangseinrichtung (16) zum Empfangen des zweiten Datensignals (20), wobei die Empfangseinrichtung (16) zwei Zeitmultiplex-Spracheinschübe (24) überwacht,
**dadurch gekennzeichnet, dass** zusätzliche Zeiteinschübe (24) von der Übertragungseinrichtung (18) dazu verwendet werden, das erste Datensignal (20) von hoher Bandbreite zu übertragen, wobei die Anzahl von verwendeten zusätzlichen Zeiteinschüben (24) eine Funktion einer gewünschten Datenrate und einer Verfügbarkeit von Ressourcen ist,
wobei die zusätzlichen Zeiteinschübe (24) dynamisch zugewiesen sind, so dass eine bestimmte Blockierungsrate für die Sprachdienstleistungen erhalten ist.

2. System nach Anspruch 1, **dadurch gekennzeichnet, dass** ein gemeinsamer Kontrollkanal für die Sprachdienstleistungen und die Datendienstleistungen verwendet ist.

3. System nach einem der Ansprüche 1 bis 2, **dadurch gekennzeichnet, dass** die Übertragungseinrichtung (18) und/oder die Empfangseinrichtung (16) eines oder mehrere aus einer aus einem Datenterminal, einem Sprachterminal und einer Gatewaystation bestehenden Gruppe aufweist.

4. System nach einem der Ansprüche 1 bis 3, **dadurch gekennzeichnet, dass** die Übertragungseinrichtung (18) und/oder die Empfangseinrichtung (16) mit einem Kommunikationsnetzwerk (22a; 22b) gekoppelt ist.

5. System nach Anspruch 4, **dadurch gekennzeichnet, dass** das Kommunikationsnetzwerk (22a; 22b) einen oder mehrere aus einer aus einem öffentlichen Telefonnetzwerk, einem öffentlichen Datennetzwerk, einem öffentlichen Landmobilfunknetzwerk und dem Internet bestehenden Gruppe aufweist.

6. System nach einem der Ansprüche 1 bis 5, **dadurch gekennzeichnet, dass** das erste Datensignal (20) und/oder das zweite Datensignal (20) einen Strahl aus einer oder mehrere aus einer aus UHF-Bandfrequenzen, L-Bandfrequenzen, S-Bandfrequenzen, C-Bandfrequenzen, Ku-Bandfrequenzen und Ka-Bandfrequenzen bestehenden Gruppe aufweist.

7. System nach einem der Ansprüche 1 bis 6, **dadurch gekennzeichnet, dass** die Relaiseinrichtung (10) einen Satelliten (10a) aufweist, vorzugsweise einen einen Digitalstrahl ausbildenden geosynchronen Kommunikationssatelliten (10a).

## Revendications

1. Système de communication de voix et de données (8) destiné à fournir une attribution flexible de la bande passante entre des services vocaux et des services de données, comprenant :
un dispositif d'émission (18), destiné à émettre un premier signal de données à bande passante élevée (20) en utilisant deux créneaux temporels de voix (24) d'un accès multiple par répartition dans le temps ;
un dispositif relais (10), destiné à recevoir le premier signal de données (20) et à émettre un second signal de données (20), dans lequel le second signal de données (20) utilise deux créneaux temporels de voix (24) d'un accès multiple par répartition dans le temps ; et
un dispositif de réception (16), destiné à recevoir le second signal de données (20), dans lequel le dispositif de réception (16) surveille deux créneaux temporels de voix (24) d'un accès multiple par répartition dans le temps ;
**caractérisé en ce que** des créneaux temporels (24) additionnels sont utilisés par le dispositif d'émission (18) pour émettre le premier signal de données à bande passante élevée (20), dans lequel le nombre des créneaux temporels (24) additionnels est une fonction d'un débit de données souhaité et de la disponibilité des ressources ;
dans lequel les créneaux temporels (24) additionnels sont attribués dynamiquement afin qu'un taux de blocage prédéterminé soit respecté pour les services vocaux.

2. Système selon la revendication 1, **caractérisé en ce qu'**un canal de commande commun est utilisé pour les services vocaux et les services de données.

3. Système selon l'une quelconque des revendications 1 et 2, **caractérisé en ce que** le dispositif d'émission (18) et/ou le dispositif de réception (16) comprennent un ou plusieurs éléments du groupe composé d'un terminal de données, d'un terminal vocal et d'une station passerelle.

4. Système selon l'une quelconque des revendications 1 à 3, **caractérisé en ce que** le dispositif d'émission (18) et/ou le dispositif de réception (16) sont couplés à un réseau de communication (22a ; 22b).

5. Système selon la revendication 4, **caractérisé en ce que** le réseau de communication (22a ; 22b) comprend un ou plusieurs éléments du groupe composé d'un réseau téléphonique public commuté, d'un réseau de données public commuté, d'un réseau mobile public terrestre et de l'Internet.

6. Système selon l'une quelconque des revendications 1 à 5, **caractérisé en ce que** le premier signal de données (20) et/ou le second signal de données (20) comprennent un faisceau d'une ou plusieurs fréquences du groupe composé des fréquences de la bande UHF, des fréquences de la bande L, des fréquences de la bande S, des fréquences de la bande C, des fréquences de la bande Ku et des fréquences de la bande Ka.

7. Système selon l'une quelconque des revendications 1 à 6, **caractérisé en ce que** le dispositif relais (10) comprend un satellite (10a), de préférence un satellite de communication géosynchrone à formation numérique de faisceau (10a).
